# EUROPEAN PATENT APPLICATION

(11) **EP 4 733 638 A1**
(43) Date of publication of application: **29.04.2026**
(21) Application number: 24831808.1
(22) Date of filing: 20.06.2024
(51) Int. Cl.: F16K 1/36, F16K 1/48

(54) **POPPET VALVE**

(30) Priority: 26.06.2023 JP 2023104189
(71) Applicant: SMC Corporation, Tokyo 104-0031 (JP)
(72) Inventor: TAMAKI Hiroaki, Ibaraki 300-2493 (JP); UETA Ryo, Ibaraki 300-2493 (JP); MORODOMI Yoichi, Ibaraki 300-2493 (JP)
(74) Representative: Keil & Schaafhausen Patentanwälte PartGmbB
(86) International application number: PCT/JP2024/022322
(87) International publication number: WO 2025/004946

(57) **Abstract**

[Object] In a poppet valve, a packing is surely mounted on a valve rod to prevent this packing from dropping off from the valve rod in operation of the selector valve.

[Solution] A packing 26 with a ring shape is mounted on a packing mounting surface 27 formed in a packing-mounted portion 17 of a valve rod 11 by holding an outer circumferential portion 26b of the packing 26 between a packing holding member 30 attached to the packing-mounted portion 17 and the packing mounting surface 27 in a state in which one side surface 26d of this packing 26 is made to abut against the packing mounting surface 27 and an inner circumferential portion 26a of this packing 26 is fitted in a packing support groove 29 formed at the inner diameter end of the packing mounting surface 27.

## Description

### Technical Field

The present invention relates to a poppet valve that opens and closes a flow path by causing a sealing member (packing) attached to a valve rod to separate from and come into contact with a valve seat portion formed in a valve housing in such a manner as to surround an opening of the flow path.

### Background Art

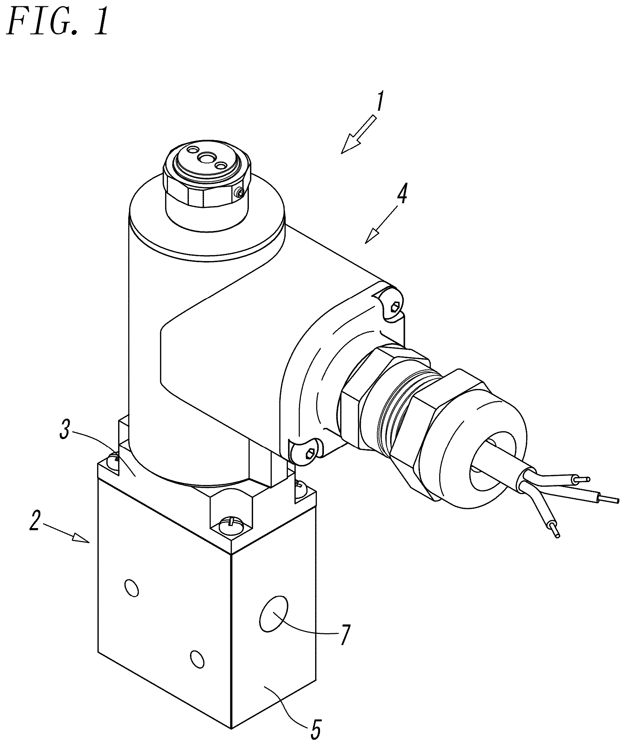

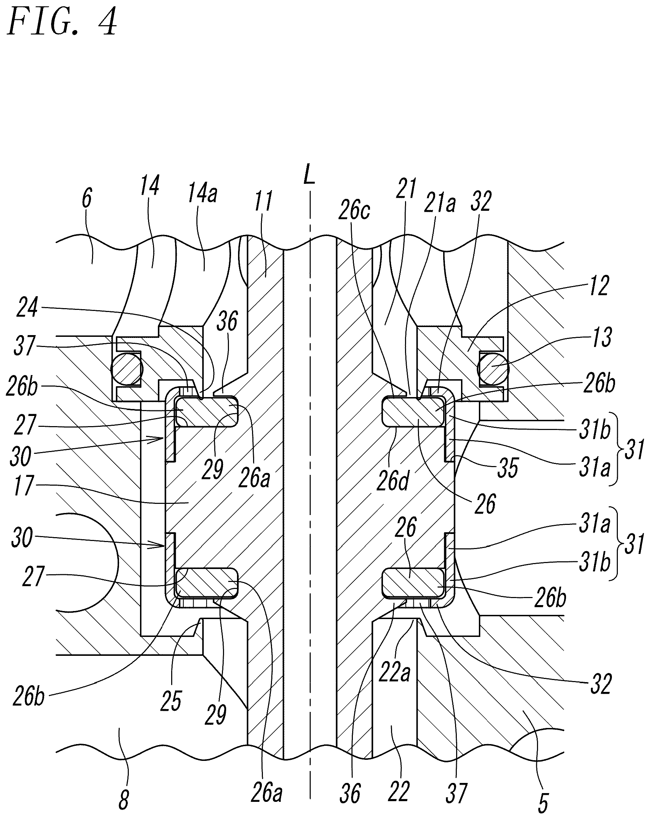

As examples of this kind of poppet valve, PTL 1 discloses a poppet valve in which a sealing member of a valve stem (valve rod) is formed by rubber lining (see Fig. 1) and a poppet valve in which the sealing member is formed of a packing (see Fig. 4).

Of these poppet valves, the poppet valve in which the sealing member is formed by the rubber lining involves problems that manufacturing takes a lot of labor, and the cost is also high because it is required to execute lining processing for forming the sealing member on the valve rod, finishing processing after the lining processing, and the like.

In contrast, in the case of the poppet valve in which the sealing member is formed of the packing, there is an advantage that manufacturing is easy and inexpensive because it is not required to execute the lining processing, the finishing processing after the lining processing, and the like for the valve rod.

However, in the case in which the sealing member is formed of the packing as in the latter case, as depicted in Fig. 4 of PTL 1, in the case of mounting the packing on the valve rod, a packing mounting groove is formed in the valve rod, and only the inner circumferential side of the packing with a ring shape is fitted into this packing mounting groove and is mounted. Thus, there is a possibility that the packing drops off from the packing mounting groove in operation of the poppet valve.

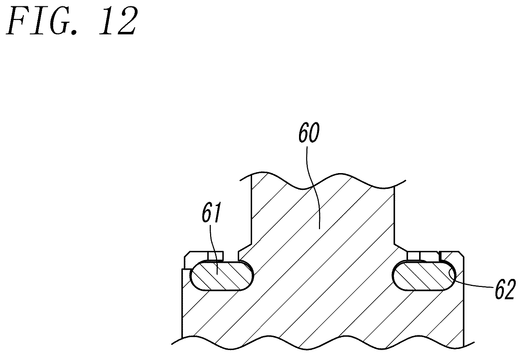

To ensure prevention of the dropping-off of the packing, it is preferable, for example, as depicted in Fig. 12, to form, in a valve rod 60, a packing mounting groove 62 in which both an inner circumferential portion and an outer circumferential portion of a packing 61 can be housed. However, it is difficult to form such a packing mounting groove 62 in the valve rod 60 by cutting processing. Even if such a packing mounting groove 62 can be formed, it is also difficult to mount the packing 61 with a ring shape in the packing mounting groove 62.

### Citation List

### Patent Literature

PTL 1: Japanese Unexamined Patent Application Publication No. 2006-46414

### Summary of Invention

### Technical Problem

A technical problem for the present invention is, in a poppet valve having a sealing member formed of a packing, to surely mount the packing on a valve rod to prevent this packing from dropping off from the valve rod in operation of the poppet valve.

### Solution to Problem

In order to solve the above-described problem, a poppet valve of the present invention is provided as a poppet-type selector valve having a valve housing and a valve rod. The valve housing internally has a flow path. The valve rod is housed inside the valve housing in a displaceable manner. The poppet-type selector valve opens and closes the flow path by causing a packing that is attached to the valve rod and has a ring shape to separate from and come into contact with a valve seat portion that has a ring shape and is formed in the valve housing in such a manner as to surround an opening of the flow path. In this poppet-type selector valve, the valve rod has a packing-mounted portion having a circular column shape, and a packing mounting surface that has an annular shape and that surrounds a central axis of the valve rod is formed at an end surface opposite to the valve seat portion in the packing-mounted portion. Further, the packing has an inner circumferential portion, an outer circumferential portion, a first side surface that comes into contact with and separates from the valve seat portion, and a second side surface on an opposite side to the first side surface. The packing is mounted on the packing mounting surface by fitting the inner circumferential portion into a packing support groove formed at an inner diameter end of the packing mounting surface and holding the outer circumferential portion between a packing holding member attached to the packing-mounted portion and the packing mounting surface in a state in which the second side surface is made to abut against the packing mounting surface.

In the present invention, it is preferable to employ the following configuration. The packing holding member has a main portion for being attached to the packing-mounted portion and a locking portion that has an annular shape and that bends inward from a tip portion with a cylindrical shape in the main portion, and the tip portion covers the outer circumferential portion of the packing and the locking portion abuts against the first side surface of the packing at a position close to the outer circumferential portion to thereby hold the outer circumferential portion of the packing between the tip portion and the locking portion and the packing mounting surface.

In this case, a plurality of notches may be formed in a radial direction in the locking portion of the packing holding member.

Further, in the present invention, it is preferable to employ the following configuration. The packing support groove is formed between a groove forming portion that is formed in the valve rod and has an annular shape and the packing mounting surface, and the outer diameter of the groove forming portion is smaller than the outer diameter of the packing-mounted portion. In addition, an outer circumferential end of the groove forming portion is opposite to an inner circumferential end of the locking portion of the packing holding member, and an annular space portion in which the valve seat portion interposes when the packing comes into contact with and separates from the valve seat portion is formed between the outer circumferential end of the groove forming portion and the inner circumferential end of the locking portion.

In the present invention, a recessed step portion for attaching a main portion of the packing holding member can be formed in an outer circumference of the packing-mounted portion, and an outer circumferential surface of the packing-mounted portion and an outer circumferential surface of the main portion of the packing holding member can be positioned on a same circular column surface by making a step of the recessed step portion equal to a thickness of the main portion.

### Advantageous Effects of Invention

According to the present invention, the packing is mounted on the packing mounting surface of the valve rod in the state in which the inner circumferential portion of the packing is fitted in the packing support groove and the outer circumferential portion of this packing is held between the packing holding member and the packing mounting surface. Thus, this packing can be mounted on the valve rod firmly and surely so as to be prevented from dropping off in operation of the selector valve.

### Brief Description of Drawings

[Fig. 1] Fig. 1 is a perspective view depicting an embodiment of a poppet valve according to the present invention.
[Fig. 2] Fig. 2 is a sectional view of a major part in which only a valve portion of the poppet valve of Fig. 1 is depicted as a cross-section.
[Fig. 3] Fig. 3 is an enlarged view of a major part in Fig. 2.
[Fig. 4] Fig. 4 is an enlarged view of a major part in Fig. 3.
[Fig. 5] Fig. 5 is a perspective view of a valve rod.
[Fig. 6] Fig. 6 is an exploded view of Fig. 5.
[Fig. 7] Fig. 7 is a plan view of a packing.
[Fig. 8] Fig. 8 is a sectional view along line VIII-VIII in Fig. 7.
[Fig. 9] Fig. 9 is a plan view of a packing holding member.
[Fig. 10] Fig. 10 is a sectional view along line X-X in Fig. 9.
[Fig. 11] Fig. 11 is a sectional view of the valve portion depicting a different operation state from Fig. 3.
[Fig. 12] Fig. 12 is a sectional view of a major part depicting a preferable mounting example in a poppet valve.

### Description of Embodiments

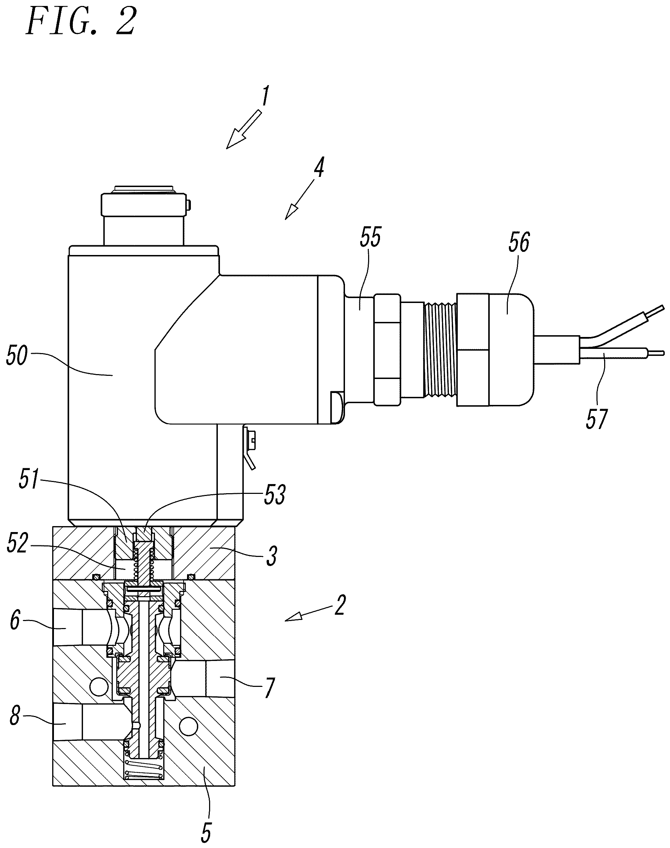

Figs. 1 and 2 depict a three-port valve of an electromagnetic operation system as an example of a poppet valve 1 according to the present invention. This poppet valve 1 has a valve portion 2 and an electromagnetic operation portion 4 coupled to an upper end portion of this valve portion 2, with a coupling block 3 interposed therebetween.

The valve portion 2 has a valve housing 5 with a rectangular block shape. A first port 6 and a third port 8 are opened in one side surface (front surface) of this valve housing 5. In addition, a second port 7 is opened in the other side surface (back surface) of this valve housing 5. In the present embodiment, the first port 6 can function as an input port by being connected to a pressure fluid source of air or the like. The second port 7 can function as an output port by being connected to fluid pressure equipment such as an air cylinder. The third port 8 can function as an exhaust port by being opened to the exterior.

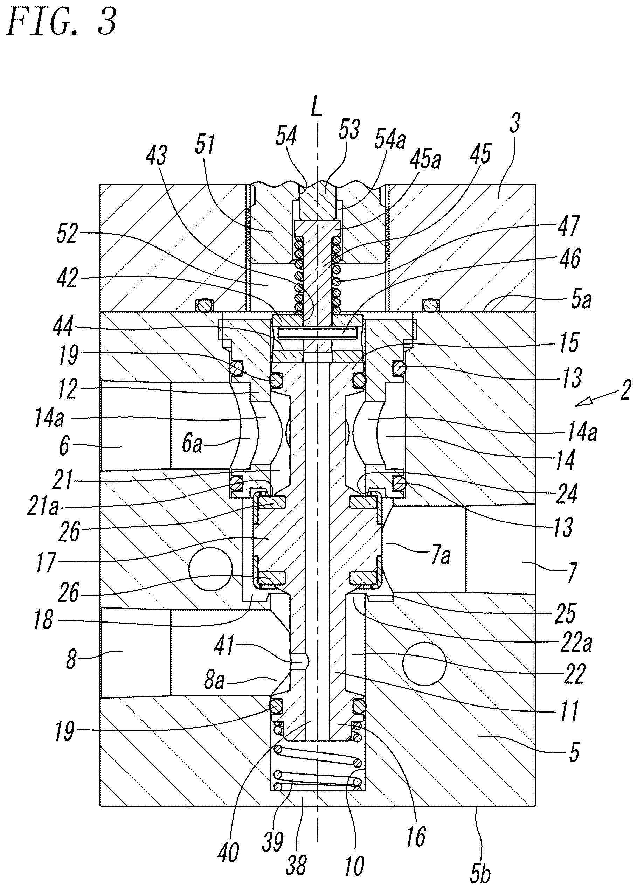

As is apparent also from Fig. 3, in the valve housing 5, a valve hole 10 extending inside the valve housing 5 from a first end (upper end) 5a on the electromagnetic operation portion 4 side to the vicinity of a second end (lower end) 5b on the opposite side is formed. The first port 6, the second port 7, and the third port 8 communicate with this valve hole 10 at positions different from each other in the direction of the central axis L through communication ports 6a, 7a, and 8a. A valve rod 11 is inserted in this valve hole 10 in such a manner as to be displaceable in the direction of the central axis L of this valve hole 10.

Part of the valve hole 10 on the upper end side, that is, a part communicating with the first port 6, is formed inside a sleeve 12 that is attached to the inside of the valve housing 5 in an airtight manner, with an O-ring 13 interposed therebetween, and is made of a metal or a synthetic resin. In this sleeve 12, an annular flow path 14 leading to the communication port 6a is formed to extend around this sleeve 12, and a plurality of connection holes 14a that couple this annular flow path 14 to the valve hole 10 are formed in the radial direction.

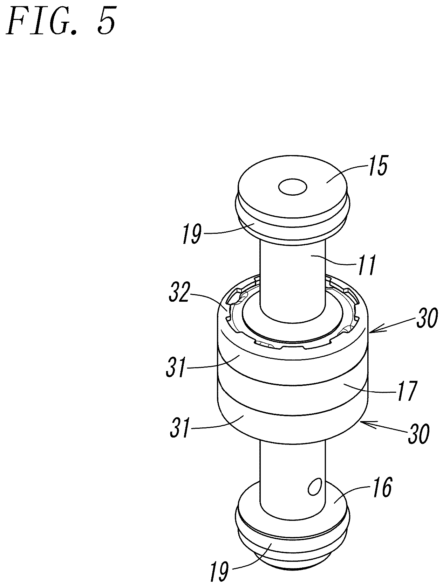

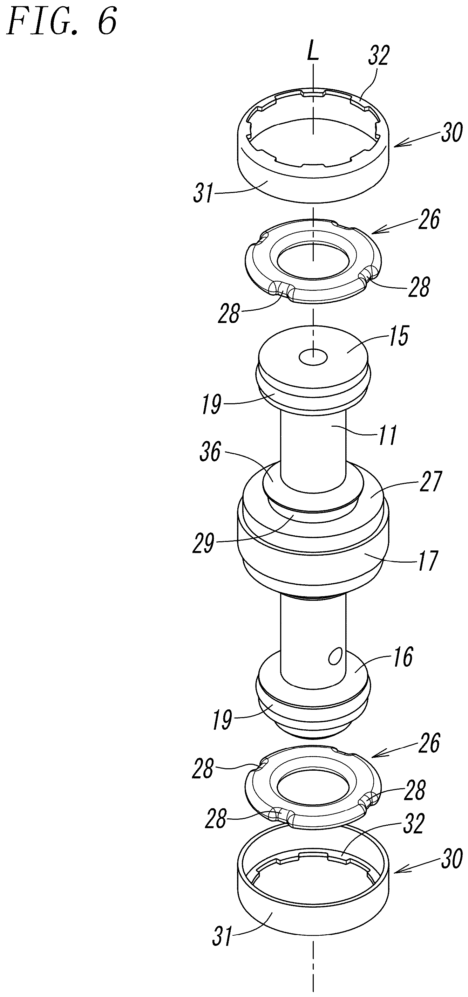

The valve rod 11 is a component composed of a metal such as stainless steel or iron. As is understood from Figs. 3 to 6, the valve rod 11 has a first land 15 at one end (upper end) that seals the upper end portion of the valve hole 10, a second land 16 at the other end (lower end) that seals a lower end portion of the valve hole 10, and a packing-mounted portion 17 at the center located in a valve chamber 18 formed at a central portion of the valve hole 10 in the direction of the central axis L. An O-ring 19 for sealing is attached to each of the first land 15 and the second land 16.

The first port 6 and the third port 8 communicate with the valve chamber 18 at relatively upper and lower positions in the direction of the central axis L through flow paths 21 and 22 formed of part of the valve hole 10 and openings 21a and 22a of them. In addition, the second port 7 communicates with the valve chamber 18 at an intermediate position between the openings 21a and 22a at the upper and lower positions due to the communication port 7a.

Further, in the valve housing 5, a first valve seat portion 24 and a second valve seat portion 25 with a ring shape are formed to surround the openings 21a and 22a at the parts at which the openings 21a and 22a communicate with the valve chamber 18. Of the first and second valve seat portions 24 and 25, the first valve seat portion 24 is formed in the sleeve 12 to surround the opening 21a of the flow path 21 leading to the first port 6, and the second valve seat portion 25 is formed at part of the valve housing 5 to surround the opening 22a of the flow path 22 leading to the third port 8. In this case, it can be thought that the sleeve 12 is part of the valve housing 5 because the sleeve 12 is attached to this valve housing 5. Therefore, it can be thought that the first valve seat portion 24 formed in the sleeve 12 is formed at part of the valve housing 5.

The packing-mounted portion 17 of the valve rod 11 has a circular column shape. A flat packing mounting surface 27 for attaching a ring-shaped packing 26 forming a sealing member is formed at each of an end surface opposite to the first valve seat portion 24 on one end (upper end) side in the direction of the central axis L in the packing-mounted portion 17 and an end surface opposite to the second valve seat portion 25 on the other end (lower end) side in the direction of the central axis L. The packings 26 are each attached to a respective one of the packing mounting surfaces 27 by fitting an inner circumferential portion 26a of this packing 26 into a packing support groove 29 formed at the inner diameter end of the packing mounting surface 27 and causing a packing holding member 30 attached to the outer circumference of the packing-mounted portion 17 to hold an outer circumferential portion 26b of this packing 26. The circular column shape of the packing-mounted portion 17 may be a circular column shape entirely having a constant diameter as depicted in Figs. 3 and 4, or may be a barrel-like circular column shape with a slightly-bulging central portion.

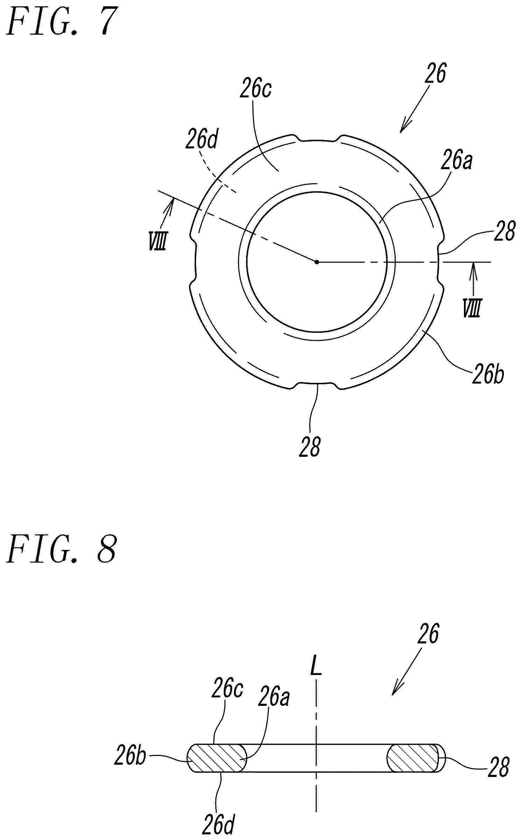

The packing 26 is a component formed into a ring shape by an elastic material such as synthetic rubber. As depicted in Figs. 7 and 8, the packing 26 has the inner circumferential portion 26a and the outer circumferential portion 26b, a flat first side surface 26c that separates from and comes into contact with the valve seat portion 24 or 25, and a flat second side surface 26d that comes into tight contact with the packing mounting surface 27.

Moreover, the packing holding member 30 is a separate component from the valve rod 11, and is formed by, for example, press processing of a stainless steel plate. As is apparent from Figs. 4, 9, and 10, the packing holding member 30 has a cylindrical main portion 31 for being attached to the packing-mounted portion 17 and a ring-shaped locking portion 32 that bends inward from the tip of this main portion 31. The main portion 31 has a base end portion 31a and a tip portion 31b continuous with the locking portion 32. The base end portion 31a is fitted and fixed to the outer circumference of the packing-mounted portion 17. The tip portion 31b covers the outer circumferential portion 26b of the packing 26, and the locking portion 32 abuts against the first side surface 26c of the packing 26 at a position close to the outer circumferential portion 26b. Due to this, the outer circumferential portion 26b of the packing 26 is held between the tip portion 31b and the locking portion 32 of the packing holding member 30 and the packing mounting surface 27.

In this manner, the packings 26 are mounted on the packing mounting surfaces 27 in the state in which the inner circumferential portion 26a of the packing 26 is fitted in the packing support groove 29 and the outer circumferential portion 26b is held by the packing holding member 30. This can mount these packings 26 on the valve rod 11 firmly and surely so that the packings 26 may be prevented from dropping off from the packing mounting surface 27 in operation of the selector valve.

A recessed groove 28 for air bleeding can be formed in the outer circumference of the packing 26. Due to this recessed groove 28, when the outer circumferential portion 26b of the packing 26 is held between the packing holding member 30 and the packing mounting surface 27, it is possible to prevent air from being confined in the holding part, that is, among the tip portion 31b and the locking portion 32 of the packing holding member 30, the outer circumferential portion 26b of the packing 26, and the packing mounting surface 27.

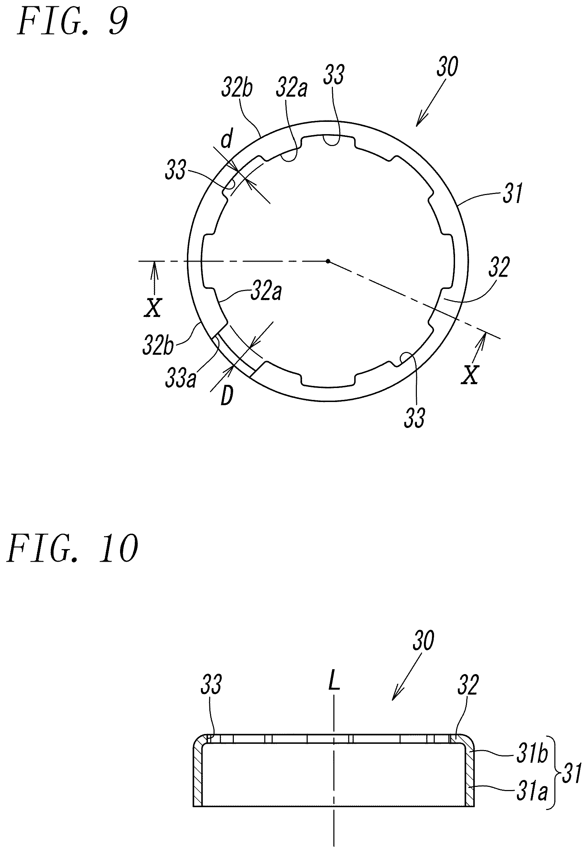

Further, as depicted in Figs. 9 and 10, a plurality of notches 33 that are hollowed radially concerning the locking portion 32 can be formed in the radial direction in this locking portion 32 of the packing holding member 30. By these notches 33, the flow path area when the packing 26 has separated from the valve seat portion 24 or 25 can be enlarged and the flow rate of air can be increased.

As depicted in Fig. 9, the depth of the notch 33 is a depth d that does not reach an outer diameter end 32b from an inner diameter end 32a of the locking portion 32. However, as depicted concerning one notch 33a in Fig. 9, it is also possible to form the depth thereof as a depth D that reaches the outer diameter end 32b from the inner diameter end 32a of the locking portion 32.

Moreover, as depicted in Fig. 4, in the outer circumference of the packing-mounted portion 17, recessed step portions 35 are formed at parts to which the base end portion 31a of the main portion 31 in the packing holding member 30 is fitted, and the steps of these recessed step portions 35 are made equal to the thickness of the main portion 31. Due to this, the outer circumferential surface of the packing-mounted portion 17 and the outer circumferential surface of the main portion 31 of the packing holding member 30 are positioned on the same circular column surface, and formation of a step between both outer circumferential surfaces is prevented. This avoids the occurrence of a turbulent flow attributed to the step when air flows along the outer circumference of the packing-mounted portion 17 in operation of the poppet valve 1.

The fixing of the packing holding member 30 to the packing-mounted portion 17 can be executed by a method such as spot welding, swaging, bonding, or screwing depending on the material and the like of these packing holding member 30 and packing-mounted portion 17. Further, the base end portion 31a of the main portion 31 of the packing holding member 30 is not necessarily required to have the cylindrical shape, and can be formed into any shape that can be fixed to the packing-mounted portion 17.

Moreover, the packing support groove 29 is formed between an annular groove forming portion 36 formed in the packing-mounted portion 17 and the packing mounting surface 27. The outer diameter of the groove forming portion 36 is smaller than that of the packing-mounted portion 17. The outer circumferential end of this groove forming portion 36 is opposite to the inner circumferential end of the locking portion 32 in the packing holding member 30. A ring-shaped space portion 37 in which the valve seat portion 24 or 25 interposes when the packing 26 comes into contact with and separates from the valve seat portion 24 or 25 is formed between the outer circumferential end of the groove forming portion 36 and the inner circumferential end of the locking portion 32.

At the lower end portion of the valve hole 10, a rod return spring 39 is interposed between a hole end wall 38 that closes this lower end portion and the lower end surface of the valve rod 11. The valve rod 11 is always biased upward by this rod return spring 39.

In the valve rod 11, a center hole 40 that passes through the inside of this valve rod 11 in the direction of the central axis L is formed, and a communication hole 41 that couples this center hole 40 to the flow path 22 leading to the third port 8 is formed.

At the upper end portion of the valve hole 10, a displacement member 42 is housed inside the sleeve 12 in such a manner as to be displaceable in the direction of the central axis L, and the lower surface of this displacement member 42 abuts against the upper end surface of the valve rod 11.

The displacement member 42 has a short circular column shape, and has a center hole 43 that passes through this displacement member 42 in the direction of the central axis L and a plurality of engagement holes 44 extending in the direction orthogonal to this center hole 43. A lower end portion of a transmission shaft 45 is inserted in the center hole 43 in such a manner as to be displaceable in the direction of the central axis L, and an engagement pin 46 attached to this transmission shaft 45 is inserted in the engagement holes 44.

A head portion 45a that doubles as a spring seat is formed at the upper end of the transmission shaft 45. A coil-shaped core return spring 47 is interposed between the lower surface of this head portion 45a and the upper surface of the displacement member 42.

The electromagnetic operation portion 4 has an operation portion housing 50, and is coupled to the upper end portion of the valve portion 2, with the coupling block 3 interposed therebetween, by screwing a lower end portion with the outer circumference in which a male screw is formed in a coupling shaft 51 protruding from the lower surface of this operation portion housing 50 into a coupling hole 52 with the inner circumference in which a female screw is formed in the coupling block 3.

A solenoid mechanism that converts electrical energy to mechanical energy and is not depicted is incorporated inside the operation portion housing 50. This solenoid mechanism has an electromagnetic coil and a fixed core that generate a magnetic field through energization, a movable core that is attracted by the fixed core due to the generation of the magnetic field and is displaced downward, and a push rod 53 displaced together with this movable core. This push rod 53 is housed in a displaceable manner in a rod housing hole 54 extending along the central axis L inside the coupling shaft 51. A lower end portion of this push rod 53 is located in a large diameter portion 54a at a lower end portion of the rod housing hole 54, and abuts against the head portion 45a at the upper end of the transmission shaft 45, fitted in this large diameter portion 54a.

The operation portion housing 50 is provided with an electrical connection portion 55. A lead wire 57 is connected to this electrical connection portion 55 by a connector 56, and power is supplied to the electromagnetic coil through this lead wire 57.

Concerning the solenoid mechanism, a publicly-known solenoid mechanism can be applied to the present invention as it is, and thus detailed depiction and description thereof are omitted.

Figs. 2, 3, and 4 depict a case in which the electromagnetic operation portion 4 is in the off-state (not energized) in the poppet valve 1 having the above-described configuration. At this time, the movable core in the solenoid mechanism is not attracted by the fixed core. Thus, the push rod 53 is pushed up through the transmission shaft 45 by a biasing force of the core return spring 47 without being pushed down by the movable core, and occupies a rising position in the diagrams together with this transmission shaft 45. Further, the engagement pin 46 engages with upper end walls of the engagement holes 44 of the displacement member 42 due to the rising of the transmission shaft 45. Due to this, this displacement member 42 also occupies a rising position integrally with the transmission shaft 45. Thus, the valve rod 11 is pushed up by the rod return spring 39 and occupies a first position depicted in the diagrams, and the packing 26 on the upper side on the packing-mounted portion 17 abuts against the first valve seat portion 24 to close the opening 21a of the flow path 21. In addition, the packing 26 on the lower side separates from the second valve seat portion 25 to open the opening 22a of the flow path 22. As a result, the flow path that couples the first port 6 to the second port 7 is interrupted, and communication is established in the flow path that couples the second port 7 to the third port 8.

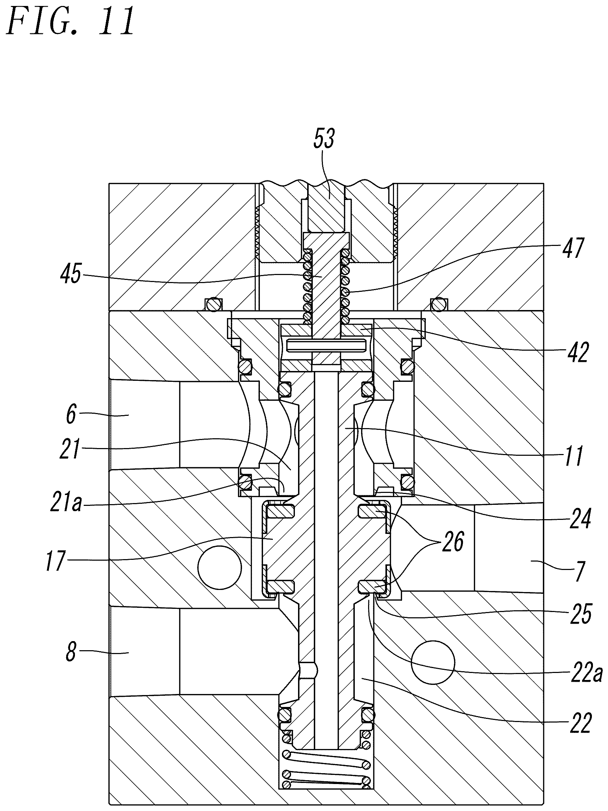

When the electromagnetic operation portion 4 becomes the on-state (energized state) from this state, the movable core in the solenoid mechanism is attracted by the fixed core and lowers, and the push rod 53 is pushed down by this movable core. Thus, as depicted in Fig. 11, the transmission shaft 45 lowers by being pushed by the push rod 53, and the core return spring 47 is compressed and the displacement member 42 is pushed down by the biasing force of the core return spring 47. Further, the valve rod 11 lowers by being pushed by this displacement member 42, and is displaced to a second position depicted in the diagram. Thus, the packing 26 on the upper side on the packing-mounted portion 17 separates from the first valve seat portion 24 to open the opening 21a of the flow path 21. In addition, the packing 26 on the lower side abuts against the second valve seat portion 25 to close the opening 22a of the flow path 22. As a result, communication is established in the flow path that couples the first port 6 to the second port 7, and the flow path that couples the second port 7 to the third port 8 is interrupted.

Although the three-port valve of the electromagnetic operation system is shown as the poppet valve 1 in the above-described embodiment, the poppet valve 1 according to the present invention may be a valve of an operation system other than the electromagnetic operation system, for example, a mechanical operation system, a manual operation system, or a pilot operation system, or may be a valve other than the three-port valve, for example, a two-port valve.

### Reference Signs List

1 poppet valve
5 valve housing
11 valve rod
17 packing-mounted portion
21, 22 flow path
21a, 22a opening
24, 25 valve seat portion
26 packing
26a inner circumferential portion
26b outer circumferential portion
26c first side surface
26d second side surface
27 packing mounting surface
29 packing support groove
30 packing holding member
31 main portion
31a base end portion
31b tip portion
32 locking portion
33 notch
35 recessed step portion
36 groove forming portion
37 space portion

## Claims

1. A poppet valve having a valve housing and a valve rod, the valve housing internally having a flow path, the valve rod being housed inside the valve housing in a displaceable manner, the poppet valve opening and closing the flow path by causing a packing that is attached to the valve rod and has a ring shape to separate from and come into contact with a valve seat portion that has a ring shape and is formed in the valve housing in such a manner as to surround an opening of the flow path, wherein
the valve rod has a packing-mounted portion having a circular column shape, and a packing mounting surface that has an annular shape and that surrounds a central axis of the valve rod is formed at an end surface opposite to the valve seat portion in the packing-mounted portion, and
the packing has an inner circumferential portion, an outer circumferential portion, a first side surface that comes into contact with and separates from the valve seat portion, and a second side surface on an opposite side to the first side surface, and the packing is mounted on the packing mounting surface by fitting the inner circumferential portion into a packing support groove formed at an inner diameter end of the packing mounting surface and holding the outer circumferential portion between a packing holding member attached to the packing-mounted portion and the packing mounting surface in a state in which the second side surface is made to abut against the packing mounting surface.

2. The poppet valve according to claim 1, wherein the packing holding member has a main portion for being attached to the packing-mounted portion and a locking portion that has an annular shape and that bends inward from a tip portion with a cylindrical shape in the main portion, and the tip portion covers the outer circumferential portion of the packing and the locking portion abuts against the first side surface of the packing at a position close to the outer circumferential portion to thereby hold the outer circumferential portion of the packing between the tip portion and the locking portion and the packing mounting surface.

3. The poppet valve according to claim 2, wherein a plurality of notches are formed in a radial direction in the locking portion of the packing holding member.

4. The poppet valve according to claim 2 or 3, wherein the packing support groove is formed between a groove forming portion that is formed in the valve rod and has an annular shape and the packing mounting surface, an outer diameter of the groove forming portion is smaller than an outer diameter of the packing-mounted portion, an outer circumferential end of the groove forming portion is opposite to an inner circumferential end of the locking portion of the packing holding member, and an annular space portion in which the valve seat portion interposes when the packing comes into contact with and separates from the valve seat portion is formed between the outer circumferential end of the groove forming portion and the inner circumferential end of the locking portion.

5. The poppet valve according to any of claims 1 to 3, wherein a recessed step portion for attaching a main portion of the packing holding member is formed in an outer circumference of the packing-mounted portion, and an outer circumferential surface of the packing-mounted portion and an outer circumferential surface of the main portion of the packing holding member are positioned on a same circular column surface by making a step of the recessed step portion equal to a thickness of the main portion.

6. The poppet valve according to claim 4, wherein a recessed step portion for attaching the main portion of the packing holding member is formed in an outer circumference of the packing-mounted portion, and an outer circumferential surface of the packing-mounted portion and an outer circumferential surface of the main portion of the packing holding member are positioned on a same circular column surface by making a step of the recessed step portion equal to a thickness of the main portion.

## Amended claims

### Amended claims under Art. 19.1 PCT

**1.** A poppet valve having a valve housing and a valve rod, the valve housing internally having a flow path, the valve rod being housed inside the valve housing in a displaceable manner, the poppet valve opening and closing the flow path by causing a packing that is attached to the valve rod and has a ring shape to separate from and come into contact with a valve seat portion that has a ring shape and is formed in the valve housing in such a manner as to surround an opening of the flow path, wherein
the valve rod has a packing-mounted portion having a circular column shape, and a packing mounting surface that has an annular shape and that surrounds a central axis of the valve rod is formed at an end surface opposite to the valve seat portion in the packing-mounted portion,
the packing has an inner circumferential portion, an outer circumferential portion, a first side surface that comes into contact with and separates from the valve seat portion, and a second side surface on an opposite side to the first side surface, and the packing is mounted on the packing mounting surface by fitting the inner circumferential portion into a packing support groove formed at an inner diameter end of the packing mounting surface and holding the outer circumferential portion between a packing holding member attached to the packing-mounted portion and the packing mounting surface in a state in which the second side surface is made to abut against the packing mounting surface, and
the packing holding member has a main portion for being attached to the packing-mounted portion and a locking portion that has an annular shape and that bends inward from a tip portion with a cylindrical shape in the main portion, and the tip portion covers the outer circumferential portion of the packing and the locking portion abuts against the first side surface of the packing at a position close to the outer circumferential portion to thereby hold the outer circumferential portion of the packing between the tip portion and the locking portion and the packing mounting surface.

**3.** The poppet valve according to claim 1, wherein a plurality of notches are formed in a radial direction in the locking portion of the packing holding member.

**4.** The poppet valve according to claim 1 or 3, wherein the packing support groove is formed between a groove forming portion that is formed in the valve rod and has an annular shape and the packing mounting surface, an outer diameter of the groove forming portion is smaller than an outer diameter of the packing-mounted portion, an outer circumferential end of the groove forming portion is opposite to an inner circumferential end of the locking portion of the packing holding member, and an annular space portion in which the valve seat portion interposes when the packing comes into contact with and separates from the valve seat portion is formed between the outer circumferential end of the groove forming portion and the inner circumferential end of the locking portion.

**5.** The poppet valve according to claims 1 or 3, wherein a recessed step portion for attaching a main portion of the packing holding member is formed in an outer circumference of the packing-mounted portion, and an outer circumferential surface of the packing-mounted portion and an outer circumferential surface of the main portion of the packing holding member are positioned on a same circular column surface by making a step of the recessed step portion equal to a thickness of the main portion.

**6.** The poppet valve according to claim 4, wherein a recessed step portion for attaching the main portion of the packing holding member is formed in an outer circumference of the packing-mounted portion, and an outer circumferential surface of the packing-mounted portion and an outer circumferential surface of the main portion of the packing holding member are positioned on a same circular column surface by making a step of the recessed step portion equal to a thickness of the main portion.

Statement under Art. 19.1 PCT
According to claim 1, the packing is mounted on the packing mounting surface of the valve rod in the state in which the inner circumferential portion of the packing is fitted in the packing support groove and the outer circumferential portion of this packing is held between the tip portion and the locking portion of the packing holding member and the packing mounting surface. Thus, this packing can be mounted on the valve rod firmly and surely so as to be prevented from dropping off in operation of the selector valve.

In contrast, reference 1 does not disclose the configuration in which the outer circumferential portion of the packing is held between the tip portion and the locking portion of the packing holding member and the packing mounting surface.

Further, reference 2 discloses a valve member 3 in which a fixing member 33 and a holding frame 34 are made to abut against parts close to an inner circumferential portion and an outer circumferential portion, respectively, of a sealing member 32. This valve member 3 has a different basic configuration from the valve member in which the locking portion of the packing holding member is made to abut against the packing at a position close to the outer circumferential portion of the packing as set forth in claim 1 of the present application. Thus, it is impossible for those skilled in the art to combine reference 2 with reference 1.
